# EUROPÄISCHE PATENTSCHRIFT

(11) **EP 1 893 877 B1**
(45) Veröffentlichungstag und Bekanntmachung des Hinweises auf die Patenterteilung: **06.07.2011**
(21) Anmeldenummer: 07722423.6
(22) Anmeldetag: 11.05.2007
(51) Int. Cl.: F16C 13/02, F16J 15/447

(54) **WELLENDICHTUNG**
SHAFT SEAL
JOINT D'ARBRE

(30) Priorität: 22.05.2006 DE 102006024154
(43) Veröffentlichungstag der Anmeldung: 05.03.2008
(73) Patentinhaber: Sandvik Mining and Construction Supply GmbH, 38170 Schöppenstedt (DE)
(72) Erfinder: HOFMAYER, Bernhard, D-38170 Schöppenstedt (DE)
(74) Vertreter: Rehmann, Thorsten
(86) Internationale Anmeldenummer: PCT/DE2007/000875
(87) Internationale Veröffentlichungsnummer: WO 2007/134576

(56) Entgegenhaltungen:
- DE-A1- 2 163 734
- FR-A- 1 359 386
- US-A- 4 452 497
- US-B1- 6 287 014

## Beschreibung

Die vorliegende Erfindung betrifft eine Wellendichtung mit einem an einer Achswelle angeordneten inneren Dichtungselement, das mindestens einen Ring aufweist, und einen an einem Rollenkörper angeordneten äußeren Dichtungselement, das mindestens einen Ring aufweist, der im Wesentlichen parallel zu den mindestens einen Ring des inneren Dichtungselementes ausgerichtet ist.

Die vorliegende Erfindung betrifft ferner eine Rolle für Förderer, insbesondere Gurt-oder Bandförderer, mit einem hohlzylindrischen Rollenkörper und einer in mindestens zwei Lagern gelagerten Achswelle, wobei an den Lagern jeweils eine Wellendichtung angeordnet ist.

Solche Rollen für einen Förderer, die mit mindestens zwei entsprechenden Wellendichtungen ausgestattet sind, sind hinreichend bekannt, beispielsweise aus der US 6,287,014.

Derartige Wellendichtungen werden, wenn die inneren und äußeren Dichtungselemente einander nicht berühren, allgemein als Labyrinthdichtung bezeichnet. Prinzipiell wird die Dichtwirkung zwischen einer in einem Gehäuse rotierenden Welle durch geeignete Anordnung der Ringe auf der Welle erzeugt, die in entsprechenden Nuten am feststehenden Gehäuse laufen. Hierdurch wird der Dichtweg um ein Vielfaches verlängert. Die Verlängerung des Dichtweges bewirkt einen Druckabbau durch die auftretende Reibung des in dem Dichtweg befindlichen Mediums, der so groß sein muss, dass am Ende des Dichtweges kein oder annähernd kein Druckunterschied mehr zum Druck außerhalb der Wellendichtung besteht.

Der Dichtweg weist einander wechselweise abfolgend mehrere Kammern auf, die über jeweils einen Labyrinthspalt miteinander verbunden sind, die Drosselstellen bilden. Die in den Labyrinthspalten teilweise in kinetische Energie umgewandelte Druckenergie wird in den nachfolgenden Kammern abgesenkt, da sie teils durch Wirbelbildung, teils als Wärme aufgezehrt wird und somit der Druckenergie verloren geht. Eine Abfolge von mehrere hintereinander geschalteten Kammern und Labyrinthspalten senkt somit ein hohes Druckniveau vor der Wellendichtung auf ein tiefes Druckniveau dahinter ab.

Aufgrund des hohen Strömungswiderstandes in dem langen Labyrinthspalt kann nur eine geringe, tolerierbare Gas- oder Flüssigkeitsmenge durch die Labyrinthdichtung austreten. Eine absolute Dichtheit ist mit dieser berührungsfreien Konstruktion aber nicht möglich. Die austretende Fluidmenge kann weiter reduziert werden, indem die Breite des Labyrinth- bzw. Dichtspaltes relativ schmal ausgebildet ist.

Der Labyrinth- bzw. Dichtspalt weist dabei üblicherweise seine geringste Breite zwischen den Stirnflächen der Ringe und den Nuten auf. Die Dichtungswirkung kann aber, wie zum Beispiel in der DE 20163734, auch über ein kleines axiales Spaltmaß zwischen den Ringen und den Nuten vermittelt werden: in der angesprochenen Druckschrift wird eine Wellendichtung offenbart, bei der die Seitenflächen der Ringe und Nuten im Einbauzustand in Kontakt miteinander stehen und sich bei Betriebsbeginn so aufeinander einschleifen, dass ein geringes Spaltmaß erreicht wird.

In dem Fall einer feststehenden Welle, um die herum ein Rollenkörper rotiert, führt eine Belastung der Rolle durch ein Fördergut zu Verformungen und Geometrieveränderungen sowohl des Rollenkörpers als auch der Wellendichtung. Bei einer aufliegenden Last und einer vertikal nach unten wirkenden Kraft, beispielsweise die Schwerkraft des Fördergutes, wird das äußere Dichtelement oberhalb der Achswelle in die Richtung des inneren Dichtelementes geneigt. Unterhalb der Achswelle wird das äußere Dichtungselement von dem inneren Dichtungselement fortgeneigt.

Daraus resultiert, dass die Dichtungselemente oberhalb der Achswelle in Kontakt miteinander kommen und aneinander reiben, während unterhalb der Achswelle das Spaltmaß sich vergrößert. Dies führt bei Rotation zu einem Pumpeffekt, so dass Luftfeuchtigkeit und/oder Staub über den äußersten Labyrinthspalt in den Dichtweg hineingezogen werden können. Durch die Spaltmaßveränderung und insbesondere den Kontakt oberhalb der Achswelle entsteht eine Bremswirkung und ein Reibschluss, so dass die Wellendichtung vorzeitigt verschleißt.

Vor diesem Hintergrund ist es die Aufgabe der vorliegenden Erfindung, eine verbesserte Wellendichtung mit hoher Zuverlässigkeit und langer Lebensdauer auch bei vertikaler Belastung anzugeben.

Diese Aufgabe wird durch eine Wellendichtung mit den Merkmalen des Anspruchs 1 und eine Rolle für einen Förderer mit den Merkmalen gemäß Anspruch 2 gelöst.

Erfindungsgemäß ist bei einer Wellendichtung der eingangs beschriebenen Art vorgesehen, dass an einem Ring eines der beiden Dichtungselemente ein ringförmig umlaufender zu einem Ring des anderen Dichtungselementes weisender Vorsprung vorgesehen ist. Ferner ist erfindungsgemäß vorgesehen, dass der Vorsprung bei einem Zusammenbau der Wellendichtung in Kontakt mit dem Ring des anderen Dichtungselementes ist und nach Beginn einer Rotationsbewegung der Achswelle und/oder des Rollenkörpers sich abschleift, bis ein schmaler Ringspalt zwischen dem Vorsprung und dem Ring des anderen Dichtungselementes ausgebildet ist.

Die wesentliche Idee besteht darin, dass die Wellendichtung zunächst eine Kontaktdichtung ist, die eine Soll-Verschleißstelle aufweist. Nach einer bestimmten Zeitdauer der Rotationsbewegung ist der Vorsprung zum Teil abgeschliffen Zwischen dem Vorsprung und dem gegenüberliegenden Ring wird folglich ein schmaler Ringspalt gebildet, der im gesamten Umfang der Wellendichtung berührungsfrei ist. Somit ist nach einer bestimmten "Einrollzeit" eine berührungsfreie Labyrinthdichtung ausgebildet. Der Vorsprung wird nur in dem Maß abgeschliffen, wie es für einen berührungsfreien Betrieb erforderlich ist, da das Abschleifen genau dann automatisch beendet wird. Ein vergleichsweise schmaler Ringspalt ist bei üblichen Wellendichtungen nur mit einer hochpräzisen Fertigungs- und Montagegenauigkeit möglich, die die Herstellungskosten für eine derartige Wellendichtung erheblich ansteigen lässt.

Die erfindungsgemäße Rolle für einen Förderer weist eine erfindungsgemäße Wellendichtung auf. Sobald die Wellendichtung berührungsfrei läuft, ist eine gleichmäßige Rotation der Förderrolle gewährleistet. Dies führt zu einem deutlich reduzierten Verschleiß des Rollenmantels, da aufgrund der gleichmäßigen Geschwindigkeit ein Anheben des Gurtes (bei einem Gurtförderer) und anschließendes herunterfallen vermieden wird. Ferner ist gerade bei Förderanlagen mit einer Vielzahl an Förderrollen, um eine bis zu mehrere Kilometer lange Förderstrecke zu bilden, wichtig, dass die Herstellung der Rollen inklusive der Abdichtungen preiswert möglich ist und die Rollen eine hohe Lebenszeit aufweisen.

Damit die Reibung gerade zu Beginn der Rotationsbewegung keine allzu große Bremswirkung entfaltet, verjüngt sich der Vorsprung bevorzugt. Der spitzförmig zulaufende Vorsprung bildet einen Kompromiss zwischen der Forderung einer geringen Reibung und einer ausreichenden Stabilität und der Abschliff bildet eine stumpfe Spitze an dem Vorsprung aus.

Eine vorteilhafte Ausgestaltung der erfindungsgemäßen Wellendichtung sieht vor, dass die Achswelle als Stator und der Rollenkörper als Rotor vorgesehen ist.

Vorteilhafterweise ist vorgesehen, dass in der Wellendichtung ein Dichtweg vorgesehen ist, bei dem von zwei jeweils gegenüberliegenden Begrenzungswänden eine dem inneren Dichtungselement und die andere dem äußeren Dichtungselement zugeordnet ist.

Um eine optimale Verlängerung des Dichtweges zu erzielen, ist bevorzugt vorgesehen, dass die Ringe des inneren Dichtungselementes und die Ringe des äußeren Dichtungselementes in Axialrichtung der Achswelle einander abwechselnd angeordnet sind.

Ferner ist bei einer erfindungsgemäßen Wellendichtung bevorzugt, dass bei mehreren vorgesehenen Vorsprüngen diese nur einem der beiden Dichtungselemente zugeordnet sind. Dann kann durch eine geeignete, unterschiedliche Materialauswahl für die beiden Dichtungselemente ein Abschleifen der Vorsprünge ohne eine Beschädigung der gegenüberliegenden Ringe sichergestellt werden.

Für einen vereinfachten Aufbau und eine zuverlässige Montage der Wellendichtung sind vorteilhafterweise das innere Dichtungselement und/oder das äußere Dichtungselement jeweils einstückig vorgesehen.

Da die erfindungsgemäße Wellendichtung auch unter einer Belastung zuverlässig funktioniert, kann sie bevorzugt für eine Rolle eines Förderers, insbesondere eines Gurt- oder Bandförderers, Verwendung finden.

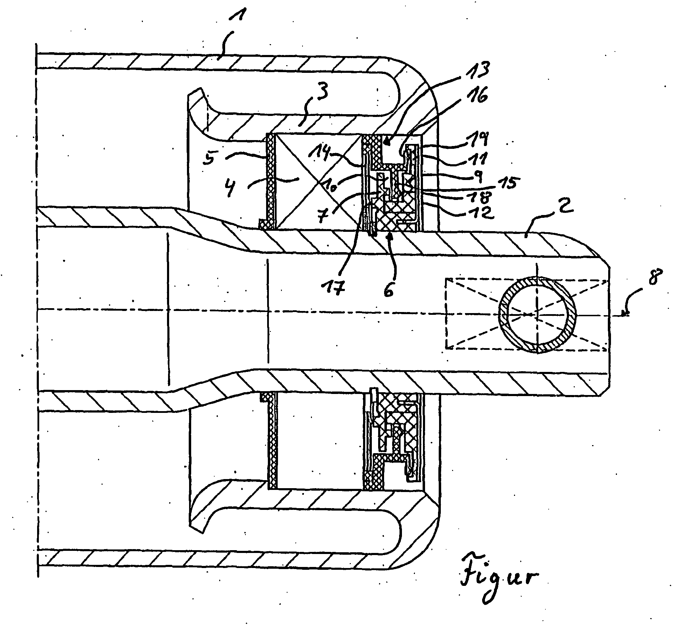

Nachfolgend wird die Erfindung anhand der detaillierten Beschreibung unter Bezug auf die beigefügte Zeichnung beispielhaft näher erläutert.

Die einzige Figur zeigt einen Längsschnitt durch ein Ausführungsbeispiel der erfindungsgemäßen Wellendichtung. Die Darstellung der Figur ist ein teilweiser Längsschnitt in Axialrichtung einer Förderrolle mit einem im Wesentlichen hohlzylindrischen Rollenkörper 1 und einer Achswelle 2, die an dem Rollenkörper 1 gelagert ist. In der Figur ist nur eine Seite der Förderrolle gezeigt und üblicherweise ist die gegenüberliegende Seite symmetrisch hierzu ausgebildet. Das Ende des Rollenkörpers 1 ist nach innen umgeformt, um einen Lagersitz 3 für ein Wälzlager 4 zu bilden. Zu dem von dem Rollenkörper 1 umschlossenen Hohlraum ist der Lagerbereich mit dem Wälzlager 4 mit einem ringförmigen Lagerdeckel 5 abgeschlossen. Die in die entgegengesetzte Richtung bzw. zur Umgebung weisende Seite des Lagerbereiches ist durch die erfindungsgemäße Wellendichtung abgeschlossen.

Die Wellendichtung weißt ein an der Achswelle 2 angeordnetes inneres Dich-tungselement 6 auf. Das innere Dichtungselement 6 ist aus einem ersten inneren Hohlzylinder und einem zweiten inneren Hohlzylinder zusammengesetzt, der an der Außenseite des ersten Hohlzylinders anliegt. An dem ersten Hohlzylinder ist ein erster innerer Ring 7 angeordnet, so dass auf beiden Seiten der Mittelachse 8 ein im Wesentlichen L-förmiger Längsschnitt bzw. Profil gebildet ist. An dem zweiten Hohlzylinder ist ein zweiter innerer Ring 9 derart angeordnet, dass zwischen dem ersten inneren Ring 7 und dem zweiten inneren Ring 9 ein Nut-förmiger Zwischenraum 10 entsteht.

An dem zweiten inneren Ring 9 ist als Verlängerung desselben ein dritter innerer Ring 11 angeordnet, der eine geringere Dicke als der zweite Ring 9 aufweist. Die drei inneren Ringe 7, 9, 11 weisen jeweils mit ihrem freien Ende nach radial außen. An der zur Umgebung zeigenden Seite des inneren Dichtungselementes 6 befindet sich ein Dichtungsdeckel 12.

In dem dargestellten Ausführungsbeispiel ist der erste Hohlzylinder einstückig mit dem ersten inneren Ring 7 ausgebildet. Ferner ist der zweite Hohlzylinder zusammen mit dem zweiten und dritten inneren Ring 9, 11 einstückig ausgebil-det. Es ist klar, dass auch das gesamte innere Dichtungselement 6 einstückig ausgebildet sein kann. Das Material für das innere Dichtungselement 6 kann ein glasfaserverstärktes Polyamid, beispielsweise PA66 GF30, sein.

Ein äußeres Dichtungselement 13 ist an dem Rollenkörper 1 angeordnet und führt in dem dargestellten Beispiel einer Förderrolle gemeinsam mit dem Rollenkörper 1 eine Rotationsbewegung relativ zu der Achswelle 2 und dem inneren Dichtungselement 6 aus. Das äußere Dichtungselement 13 ist aus einem ringförmigen Element mit einem im Wesentlichen Y-förmigen Profil im Längsschnitt und einem ersten äußeren Ring 14 zusammengesetzt.

Der erste äußere Ring 14 ist an einem Arm des Y angrenzend angeordnet und weist mit seinem freien Ende nach radial innen. Ein zweiter äußerer Ring 15 wird durch das Bein des Y gebildet. Auch der zweite äußere Ring 15 weist mit seinem freien Ende nach radial innen, d.h. zur Mittelachse 8. Der zur Umgebung weisende Arm des Y bildet einen dritten äußeren Ring 16, der im Gegensatz zu den ersten beiden inneren Ringen 14 und 15 mit seinem freien Ende nach radial außen weist.

An den drei äußeren Ringen 14, 15 und 16 ist jeweils ein Vorsprung 17, 18 und 19 vorgesehen. Dabei ist der spitzförmig zulaufende Vorsprung 17 des ersten äußeren Ringes 14 zu dem ersten inneren Ring 17 hin ausgerichtet. Der zweite Vorsprung 18 an dem zweiten äußeren Ring 15 ist auf den zweiten inneren Ring 9 weisend ausgerichtet. Schließlich ist der dritte Vorsprung 19 an dem dritten äußeren Ring 16 derart angeordnet, dass seine Spitze zu dem dritten inneren Ring 11 zeigt. In dem dargestellten Beispiel ist das äußere Dichtungselement 13 aus einem im Vergleich zu dem Material des inneren Dichtungselementes 6 relativ weichen bzw. abschleifbaren Material, beispielsweise POM bzw. Polyazetat, hergestellt.

Bei der Montage der Wellendichtung sind die Vorsprünge 17, 18 bzw. 19 in Reibkontakt mit dem ersten inneren Ring 7, dem zweiten inneren Ring 9 bzw. dem dritten inneren Ring 11. Nach Aufnahme der Rotationsbewegung des Rollenkörpers 1 bezogen auf die Achswelle 2 reibt das äußere Dichtungselement 13 an dem inneren Dichtungselement 6 und es werden die jeweiligen Spitzen der Vorsprünge 17, 18 und 19 aufgrund der Reibung abgeschliffen, bis jeweils ein schmaler Ringspalt ausgebildet ist. Nachdem die Ringspalte gebildet worden sind, läuft die Wellendichtung berührungsfrei. Dieser "Einroll"-Vorgang bis die Wellendichtung berührungsfrei läuft, dauert einige wenige Tage, erfahrungsgemäß in etwa zwei Tage.

Es ist klar, dass in der Einrollzeit eine höhere Leistung für die Rotation der Förderrolle aufgebracht werden muss, da die Reibverlustenergie ausgeglichen werden muss. Sobald die Ringspalte gebildet sind, wird eine entsprechend geringe Leistung des Antriebssystems benötigt.

Wenn auf den Rollenkörper 1 eine Last, beispielsweise durch ein Fördergut, aufgebracht wird, bewirkt die Verformung der Rolle ein Verkippen bzw. Neigen der äußeren Ringe 14, 15 und 16 in Bezug auf die inneren Ringe 7, 9 und 11. In diesem Fall werden die Vorsprünge 17, 18 und 19 weiter abgeschliffen, bis wieder ein berührungsfreier Lauf stattfinden kann. Der Wechsel von einem belasteten Rollenkörper 1 zu einem unbelasteten Rollenkörper 1 bewirkt dann lediglich eine Veränderung des Spaltringes, ohne dass ein Reibkontakt hergestellt wird. Dadurch wird der so genannte Pumpeffekt vermieden.

Der Labyrinthspalt der Wellendichtung ist vorzugsweise mit einem Schmier- bzw. Dichtmittel, beispielsweise ein Fett, gefüllt. Durch die Rotation des Rollenkörpers 1 wird das Fett nach radial außen geschleudert und sammelt sich ins-besondere in dem Labyrinthspalt in den Raum um das freie Ende des ersten inneren Ringes 7 herum an. Dadurch wird der Labyrinthspalt zwischen dem ersten inneren Ring 7 und dem äußeren Dichtungselement 13 wirksam abgedichtet.

Bei einem Stillstand des Rollenkörpers 1 entfällt die das Fett nach außen wirkende Schleuderkraft. Das vorzugsweise relativ zähe Fett setzt sich ab und "fließt" langsam in der Wellendichtung aufgrund der Schwerkraft nach unten. D.h. im unteren Anteil der Wellendichtung dichtet das Fett den Labyrinthspalt in dem Raum um das freie Ende des inneren Ringes 7 ab. Im oberen Bereich der Wellendichtung füllt das Fett den Raum um das freie Ende des zweiten äußeren Ringes 15 auf und dichtet den Labyrinthspalt dort ab. Auf diese Weise ist ein Schutz vor eindringendem Schmutz und eindringender Feuchtigkeit sowohl im Betrieb als auch im Stillstand des Rollenkörpers 1 ermöglicht.

## Patentansprüche

1. Wellendichtung zur Verwendung für eine Rolle eines Förderers, insbesondere Gurt- oder Bandförderers mit einem an einer Achswelle (2) angeordneten inneren Dichtungselement (6), das mindestens einen Ring (7, 9, 11) aufweist, und einem an einem Rollenkörper (1) angeordneten äußeren Dichtungselement, das mindestens einen Ring (14, 15, 16) aufweist, der im Wesentlichen parallel zu dem mindestens einen Ring (7, 9, 11) des inneren Dichtungselementes (6) ausgerichtet ist, **dadurch gekennzeichnet, dass** an einem der Ringe (14, 15, 16) eines der beiden Dichtungselemente (13) ein ringförmig umlaufender zu-einem Ring (7, 9, 11) des anderen Dichtungselementes (6) weisender Vorsprung (17, 18, 19) vorgesehen ist, der bei einem Zusammenbau der Wellendichtung in Kontakt mit dem Ring (7, 9, 11) des anderen Dichtungselementes (6) ist und der nach Beginn einer Rotationsbewegung der Achswelle (2) und/oder des Rollenkörpers (1) sich abschleift, bis ein schmaler Ringspalt zwischen dem Vorsprung (17, 18, 19) und dem Ring (7, 9, 11) des anderen Dichtungselementes (6) ausgebildet ist.

2. Rolle für einen Förderer, insbesondere Gurt- oder Bandförderer, mit einem hohlzylindrischen Rollenkörper (1) und einer in mindestens zwei Lagern (4) gelagerten Achswelle (2), **dadurch gekennzeichnet dass**, an den Lagern (4) jeweils eine Wellendichtung gemäß Anspruch 1 angeordnet ist.

3. Rolle nach Anspruch 2, **dadurch gekennzeichnet, dass** der Vorsprung (17, 18, 19) sich verjüngt.

4. Rolle nach Anspruch 2 oder 3, **dadurch gekennzeichnet, dass** die Achswelle (2) als Stator und der Rollenkörper (1) als Rotor vorgesehen ist.

5. Rolle nach einem oder mehreren der vorstehenden Ansprüche 2 bis 4, **gekennzeichnet durch** einen Dichtweg, bei dem von zwei jeweils gegenüberliegenden Begrenzungswänden eine dem inneren Dichtungselement (6) und die andere dem äußeren Dichtungselement (13) zugeordnet ist.

6. Rolle nach einem oder mehreren der vorstehenden Ansprüche 2 bis 5, **dadurch gekennzeichnet, dass** die Ringe (7, 9, 11) des inneren Dichtungselementes (6) und die Ringe (14, 15, 16) des äußeren Dichtungselementes (13) in Axialrichtung der Achswelle (2) einander abwechselnd angeordnet sind.

7. Rolle nach einem oder mehreren der vorstehenden Ansprüche 2 bis 6, **dadurch gekennzeichnet, dass** bei mehreren vorgesehenen Vorsprüngen (17, 18, 19) diese nur einem der beiden Dichtungselemente (6, 13) zugeordnet sind.

8. Rolle nach einem oder mehreren der vorstehenden Ansprüche 2 bis 7, **dadurch gekennzeichnet, dass** das innere Dichtungselement (6) und/oder das äußere Dichtungselement (13) jeweils einstückig vorgesehen sind.

## Claims

1. Shaft seal for use with a roller of a conveyor, in particular a belt or band conveyor with an inner sealing element (6) arranged on an axle shaft (2), which inner sealing element has at least one ring (7, 9, 11), and an outer sealing element arranged on a roller body (1), which outer sealing element has at least one ring (14,15,16), which is aligned substantially parallel to the at least one ring (7, 9, 11) of the inner sealing element (6), **characterised in that** an annular revolving projection (17, 18, 19) is provided on one of the rings (14, 15, 16) of one of the two sealing elements (13), pointing to a ring (7, 9,11) of the other sealing element (6), which projection is in contact with the ring (7, 9, 11) of the other sealing element in an assembly of the shaft seal, and which, after the start of a rotational movement of the axle shaft (2) and/or the roller body (1) is abraded, until a narrower annular gap is formed between the projection (17, 18, 19) and the ring (7, 9, 11) of the other sealing element (6).

2. Roller for a conveyor, in particular a belt of band conveyor, with a hollow cylindrical roller body (1) and an axle shaft (2) mounted in at least two bearings (4), **characterised in that** a shaft seal according to claim 1 is arranged on the bearings in each case.

3. Roller according to claim 2, **characterised in that** the projection (17, 18, 19) tapers.

4. Roller according to claim 2 or 3, **characterised in that** the axle shaft (2) is provided as a stator and the roller body (1) as a rotor.

5. Roller according to one or more of claims 2 to 4, **characterised by** a seal path, in which one of two opposed limiting walls is associated with the inner sealing element (6) and the other with the outer sealing element (13).

6. Roller according to one or more of claims 2 to 5, **characterised in that** the rings (7, 9,11) of the inner sealing element (6) and the rings (14, 15, 16) of the outer sealing element (13) are arranged alternately with each other in the axial direction of the axle shaft (2).

7. Roller according to one or more of claims 2 to 6, **characterised in that** with a plurality of projections (17, 18, 19), these are associated with only one of the two sealing elements (6,13).

8. Roller according to one or more of claims 2 to 7, **characterised in that** the inner sealing element (6) and/or the outer sealing element (13) in each case are provided in one piece.

## Revendications

1. Joint d'arbre destiné à servir pour un rouleau d'un convoyeur, en particulier un convoyeur à bande ou à courroie, comprenant un élément de joint intérieur (6) qui est agencé sur un arbre d'essieu (2) et présente au moins un anneau (7, 9, 11), et un élément de joint extérieur qui est agencé sur un corps de rouleau (1) et présente au moins un anneau (14, 15, 16) orienté sensiblement parallèlement à l'au moins un anneau (7, 9, 11) de l'élément de joint intérieur (6), **caractérisé en ce qu'**il est prévu sur l'un des anneaux (14, 15, 16) de l'un des deux éléments de joint (13), une saillie (17, 18, 19) qui s'étend en anneau en pointant vers un anneau (7, 9, 11) de l'autre élément de joint (6), et qui est en contact avec l'anneau (7, 9, 11) de l'autre élément de joint (6) lors d'un assemblage du joint d'arbre, et après le début d'un mouvement de rotation de l'arbre d'essieu (2) et/ou du corps de rouleau (1) la saillie s'use jusqu'à ce qu'il se forme une étroite fente annulaire entre la saillie (17, 18, 19) et l'anneau (7, 9, 11) de l'autre élément de joint (6).

2. Rouleau pour un convoyeur, en particulier un convoyeur à bande ou à courroie, comprenant un corps de rouleau (1) en cylindre creux et un arbre d'essieu (2) monté dans au moins deux paliers (4), **caractérisé en ce qu'**un joint d'arbre respectif selon la revendication 1 est agencé à chaque palier (4).

3. Rouleau selon la revendication 2, **caractérisé en ce que** la saillie (17, 18, 19) va en se rétrécissant.

4. Rouleau selon la revendication 2 ou 3, **caractérisé en ce que** l'arbre d'essieu (2) est prévu en tant que stator et le corps de rouleau (1) en tant que rotor.

5. Rouleau selon l'une ou plusieurs des revendications 2 à 4, **caractérisé par** trajet d'étanchéité, dans lequel parmi deux parois de délimitation se faisant face chacune, l'une est associée à l'élément de joint intérieur (6) et l'autre à l'élément de joint extérieur (13).

6. Rouleau selon l'une ou plusieurs des revendications 2 à 5, **caractérisé en ce que** les anneaux (7, 9, 11) de l'élément de joint intérieur (6) et les anneaux (14, 15, 16) de l'élément de joint extérieur (13) sont agencés en alternance dans la direction axiale de l'arbre d'essieu (2).

7. Rouleau selon l'une ou plusieurs des revendications 2 à 6, **caractérisé en ce que** pour plusieurs saillies (17, 18, 19) prévues, celles-ci ne sont associées qu'à l'un des deux éléments de joint (6, 13).

8. Rouleau selon l'une ou plusieurs des revendications 2 à 7, **caractérisé en ce que** l'élément de joint intérieur (6) et/ou l'élément de joint extérieur (13) sont prévus chacun d'un seul tenant.
